# FASCICULE DE BREVET EUROPEEN

(11) **EP 4 455 497 B1**
(45) Date de publication et mention de la délivrance du brevet: **25.11.2026**
(21) Numéro de dépôt: 24168548.6
(22) Date de dépôt: 04.04.2024
(51) Int. Cl.: F16C 7/06

(54) **BIELLE RÉGLABLE EN LONGUEUR DE FAÇON CONTINUE ET PROCÉDÉ DE MONTAGE DE LA BIELLE RÉGLABLE**
STUFENLOS LÄNGENVERSTELLBARE PLEUELSTANGE UND VERFAHREN ZUR MONTAGE DER VERSTELLSTANGE
CONTINUOUSLY ADJUSTABLE CONNECTING ROD AND METHOD FOR MOUNTING THE ADJUSTABLE CONNECTING ROD

(30) Priorité: 27.04.2023 FR 2304256
(43) Date de publication de la demande: 30.10.2024
(73) Titulaire: AIRBUS OPERATIONS (SAS), 31060 Toulouse (FR)
(72) Inventeur: PEREZ, Benoît, 31060 TOULOUSE (FR); MAZARS, Vincent, 31060 TOULOUSE (FR)
(74) Mandataire: Gevers & Orès

(56) Documents cités:
- US-A- 4 611 944
- US-A1- 2008 240 848
- US-B1- 6 902 341

## Description

### Domaine technique

La présente invention concerne une bielle réglable en longueur de façon continue et un procédé de montage de la bielle réglable.

### État de la technique

Une bielle correspond à une pièce allongée, telle qu'une barre, faisant une liaison articulée ou non entre deux éléments. Afin de fixer la bielle aux deux éléments, il est nécessaire que la longueur de la bielle soit adaptée à la distance entre les deux éléments. Il existe déjà des bielles réglables permettant d'ajuster leur longueur afin de l'adapter à ladite distance entre les deux éléments. Ces bielles réglables présentent une chape reliée à un corps de bielle par vissage d'une tige filetée dans un alésage situé à une extrémité du corps de bielle. Or, afin d'ajuster la longueur de la chape afin qu'elle puisse être fixée à l'élément auquel elle est destinée, la tige filetée doit tourner des moitiés de tours afin que la chape soit alignée avec ledit élément. Cela entraîne un réglage qui n'est pas continu. En effet, le réglage de la longueur de la bielle est réalisé par pas discret qui correspond à une valeur qui est un multiple de la moitié du pas de vis de la tige filetée. Le réglage de la longueur de la bielle n'est donc pas satisfaisant.

Par ailleurs, un réglage d'une telle bielle est fastidieux. En effet, il est nécessaire de désaligner le corps de bielle par rapport aux deux éléments pour pouvoir faire les moitiés de tour de la tige filetée.

Il existe également des bielles réglables de façon continue comme par exemple dans le document US 6 902 341 B1 qui divulgue une bielle réglable en longueur selon le préambule de la revendication 1. Mais, ces bielles sont complexes, onéreuses et ne peuvent être fabriquées par des procédés conventionnels.

Les bielles réglables en longueur qui existent actuellement ne sont pas complètement satisfaisantes.

### Exposé de l'invention

La présente invention a pour objet de pallier les inconvénients des bielles réglables existantes.

Pour cela, elle concerne une bielle réglable en longueur s'étendant selon un axe longitudinal comprenant :
- un dispositif d'ajustement configuré pour ajuster la longueur de la bielle réglable et d'articuler la bielle réglable à un premier élément,
- un corps de bielle présentant une première extrémité comportant le dispositif d'ajustement et une deuxième extrémité destinée à lier la bielle réglable à un deuxième élément.

Selon l'invention, le dispositif d'ajustement comprend au moins une chape de fixation destinée à fixer la bielle réglable au premier élément et une pièce intermédiaire liant la chape au corps de bielle entre une liaison pivot et une liaison hélicoïdale,
la liaison hélicoïdale étant configurée pour permettre une translation de la chape le long d'un axe pivot parallèle à l'axe longitudinal de la bielle réglable lorsque la pièce intermédiaire est mise en rotation par un utilisateur autour de l'axe pivot,
la liaison pivot étant configurée pour autoriser le maintien d'une position angulaire de la chape autour de l'axe pivot quand la pièce intermédiaire est mise en rotation autour de l'axe pivot.

Ainsi, grâce à la combinaison de la liaison hélicoïdale mise en mouvement par un utilisateur à l'aide de la pièce intermédiaire et de la liaison pivot, la longueur de la bielle réglable peut être ajustée continûment tout en maintenant une position angulaire de la chape pendant la mise en mouvement de la liaison hélicoïdale.

En outre, le dispositif d'ajustement comporte un dispositif de verrouillage configuré pour bloquer la rotation de la pièce intermédiaire par rapport au corps de bielle après que la chape a atteint une position souhaitée permettant la fixation de la chape au premier élément.

Selon l'invention, la liaison pivot lie la pièce intermédiaire au corps de bielle et la liaison hélicoïdale lie la pièce intermédiaire à la chape.

Selon l'invention, la chape comprend une tige filetée présentant un axe longitudinal confondu avec l'axe pivot,
la pièce intermédiaire présentant une forme générale cylindrique ayant un axe de révolution confondu avec l'axe pivot,
la pièce intermédiaire présentant en outre un alésage traversant taraudé, l'alésage traversant taraudé présentant un axe de révolution confondu avec l'axe pivot, la tige filetée de la chape étant vissée dans l'alésage traversant taraudé de la pièce intermédiaire pour former la liaison hélicoïdale,
le corps de bielle présentant un alésage lisse présentant un axe de révolution confondu avec l'axe pivot, l'alésage lisse présentant une première extrémité débouchant sur la première extrémité du corps de bielle,
la pièce intermédiaire présentant une surface externe lisse, la pièce intermédiaire étant insérée dans l'alésage lisse pour former la liaison pivot,
le dispositif d'ajustement comprenant en outre un dispositif de blocage configuré pour bloquer la pièce intermédiaire en translation parallèlement à l'axe pivot,
une rotation de la pièce intermédiaire par rapport au corps de bielle par un utilisateur étant susceptible d'entraîner une translation de la chape selon l'axe pivot quand la chape est bloquée en rotation autour de l'axe pivot par l'utilisateur, la pièce intermédiaire présentant une gorge circonférentielle sur sa surface externe, le dispositif de blocage comprend au moins une tige de retenue, la ou les tiges de retenue traversant au moins partiellement le corps de bielle perpendiculairement à l'axe pivot, la ou les tiges de retenue étant insérées partiellement dans la gorge circonférentielle de la pièce intermédiaire parallèlement à la gorge circonférentielle.

L'invention concerne également un procédé de montage de la bielle à un premier élément et à un deuxième élément.

Selon l'invention, le procédé comprend les étapes suivantes :
- une étape d'alignement de la bielle réglable entre le deuxième élément et le premier élément,
- une étape d'alignement de la chape dans une position angulaire souhaitée autour de l'axe pivot par rapport au premier élément,
- une étape de rotation de la pièce intermédiaire du dispositif d'ajustement par une mise en mouvement de la liaison hélicoïdale, la pièce intermédiaire étant mise en rotation par rapport au corps de bielle par un utilisateur pour entraîner une translation de la chape parallèlement à l'axe de pivot jusqu'à ce que la chape atteigne une position souhaitée permettant la fixation de la chape au premier élément, la liaison pivot étant mise en mouvement par la rotation de la pièce intermédiaire alors que la position angulaire de la chape est maintenue,
- une étape de fixation de la chape au premier élément.

Selon une configuration, le procédé comprend une étape de fixation de la deuxième extrémité du corps de bielle au deuxième élément.

Selon une particularité, le procédé comprend en outre une étape de verrouillage par le dispositif de verrouillage pour bloquer la rotation de la pièce intermédiaire par rapport au corps de bielle après que la chape a atteint une position souhaitée permettant la fixation de la chape au premier élément.

### Brève description des figures

Les figures annexées feront bien comprendre comment l'invention peut être réalisée. Sur ces figures, des références identiques désignent des éléments semblables.
La figure 1 représente un écorché partiel schématique de profil d'un dispositif d'ajustement de la bielle réglable selon une variante ne faisant pas partie de l'invention.
La figure 2 représente une vue schématique de la bielle réglable fixée au premier et au deuxième élément.
La figure 3 représente schématiquement le procédé de montage de la bielle réglable.
La figure 4 représente un écorché partiel en perspective de la bielle réglable selon une variante ne faisant pas partie de l'invention.
La figure 5 représente un écorché partiel en perspective de la bielle réglable selon une variante ne faisant pas partie de l'invention.
La figure 6 représente un écorché partiel en perspective de la bielle réglable selon l'invention.
La figure 7 représente une coupe longitudinale de la bielle réglable selon une variante.

### Description détaillée

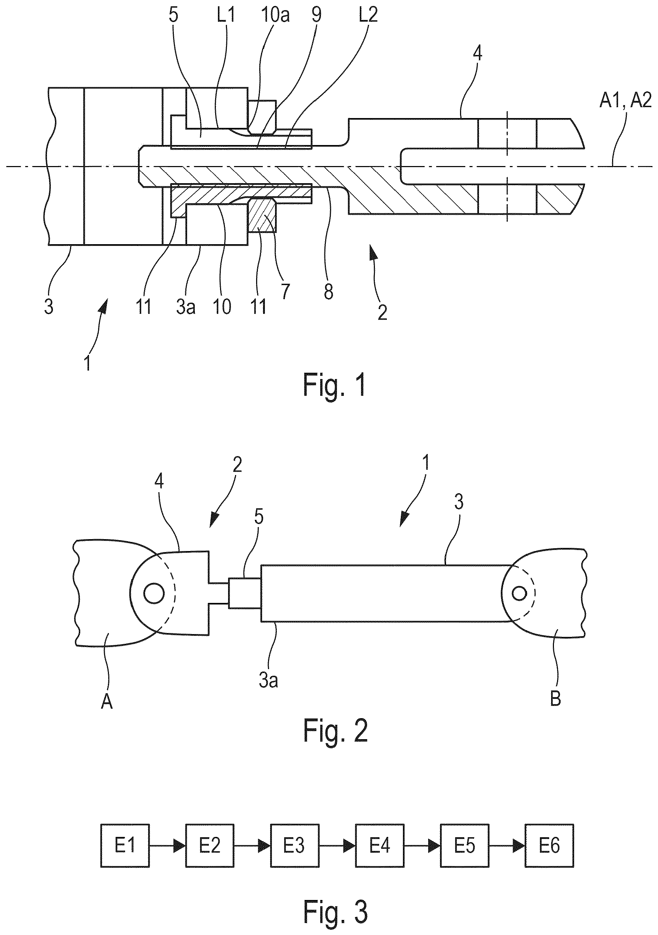

Les modes de réalisations et les variantes de la bielle réglable 1 sont représentés sur la figure 1 et les figures 4 à 7.

La bielle réglable 1 est réglable en longueur. Elle s'étend selon un axe longitudinal A1.

La bielle réglable comprend un dispositif d'ajustement 2 configuré pour ajuster la longueur de la bielle réglable 1 et pour articuler la bielle réglable 1 à un premier élément A.

La bielle réglable 1 comprend également un corps de bielle 3 présentant une première extrémité 3a comportant le dispositif d'ajustement 2 et une deuxième extrémité 3b destinée à lier la bielle réglable 1 à un deuxième élément B.

La deuxième extrémité 3b est destinée à lier la bielle réglable 1 au deuxième élément B selon deux configurations.

Selon une première configuration de la bielle réglable 1, la deuxième extrémité 3b est destinée à articuler la bielle réglable 1 au deuxième élément B.

Selon une deuxième configuration de la bielle réglable 1, la deuxième extrémité 3b est liée solidairement au deuxième élément B. Ainsi, à titre d'exemple, le deuxième élément B peut comprendre le corps de bielle 3.

Le premier élément A et le deuxième élément B peuvent correspondre à deux systèmes distincts qui sont destinés à être liés entre eux par la bielle réglable 1 (figure 2).

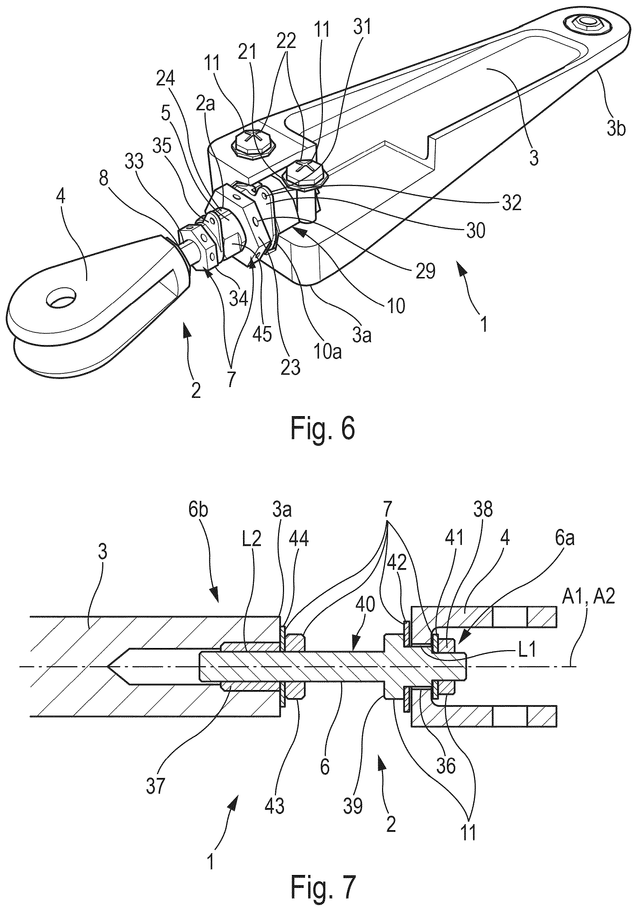

Comme représenté sur la figure 1 et la figure 7, le dispositif d'ajustement 2 comprend au moins une chape 4 de fixation destinée à fixer la bielle réglable 1 au premier élément A et une pièce intermédiaire 5, 6 liants la chape 4 au corps de bielle 3 entre une liaison pivot L1 et une liaison hélicoïdale L2.

La liaison hélicoïdale L2 est configurée pour permettre une translation de la chape 4 le long d'un axe pivot A2 parallèle à l'axe longitudinal A1 de la bielle réglable 1 lorsque la pièce intermédiaire 5, 6 est mise en rotation par un utilisateur autour de l'axe pivot A2.

La liaison pivot L1 est configurée pour autoriser le maintien d'une position angulaire de la chape 4 autour de l'axe pivot A2 quand la pièce intermédiaire 5, 6 est mise en rotation autour de l'axe pivot A2.

Par exemple, l'utilisateur peut maintenir la position angulaire de la chape 4 afin qu'elle reste alignée avec le premier élément A quand la pièce intermédiaire 5, 6 est en rotation autour de l'axe pivot A2.

Le dispositif d'ajustement 2 peut également comporter un dispositif de verrouillage 7 configuré pour bloquer la rotation de la pièce intermédiaire 5, 6 par rapport au corps de bielle 3 après que la chape 4 a atteint une position souhaitée permettant la fixation de la chape 4 au premier élément A.

Selon un premier mode de réalisation représenté sur la figure 1, la figure 4, la figure 5 et la figure 6, la liaison pivot L1 lie la pièce intermédiaire 5 au corps de bielle 3. De plus, la liaison hélicoïdale L2 lie la pièce intermédiaire 5 à la chape 4.

Dans ce premier mode de réalisation, la chape 4 comprend une tige filetée 8 présentant un axe longitudinal confondu avec l'axe pivot A2. La pièce intermédiaire 5 présente une forme générale cylindrique ayant un axe de révolution confondu avec l'axe pivot A2. La pièce intermédiaire 5 présentant en outre un alésage traversant taraudé 9. L'alésage traversant taraudé 9 présente un axe de révolution confondu avec l'axe pivot A2. La tige filetée 8 de la chape 4 est vissée dans l'alésage traversant taraudé 9 de la pièce intermédiaire 5 pour former la liaison hélicoïdale L2.

De plus, dans ce premier mode de réalisation, le corps de bielle 3 comporte un alésage lisse 10 présentant un axe de révolution confondu avec l'axe pivot A2. L'alésage lisse 10 présente une première extrémité 10a débouchant sur la première extrémité 3a du corps de bielle 3. La pièce intermédiaire 5 présente une surface externe lisse. La pièce intermédiaire 5 est insérée dans l'alésage lisse 10 pour former la liaison pivot L1. Une rotation de la pièce intermédiaire 5 par rapport au corps de bielle 3 par un utilisateur est susceptible d'entraîner une translation de la chape 4 selon l'axe pivot A2 quand la chape 4 est bloquée en rotation autour de l'axe pivot A2 par l'utilisateur.

Dans ce premier mode de réalisation, le dispositif d'ajustement 2 comprend en outre un dispositif de blocage 11 configuré pour bloquer la pièce intermédiaire 5 en translation parallèlement à l'axe pivot A2. Ce dispositif de blocage permet de maintenir la liaison pivot L1 entre la pièce intermédiaire 5 et le corps de bielle 30a afin qu'elle ne devienne pas une liaison pivot glissant. Le dispositif de blocage 11 peut comprendre le dispositif de verrouillage 7, comme représenté sur la figure 1.

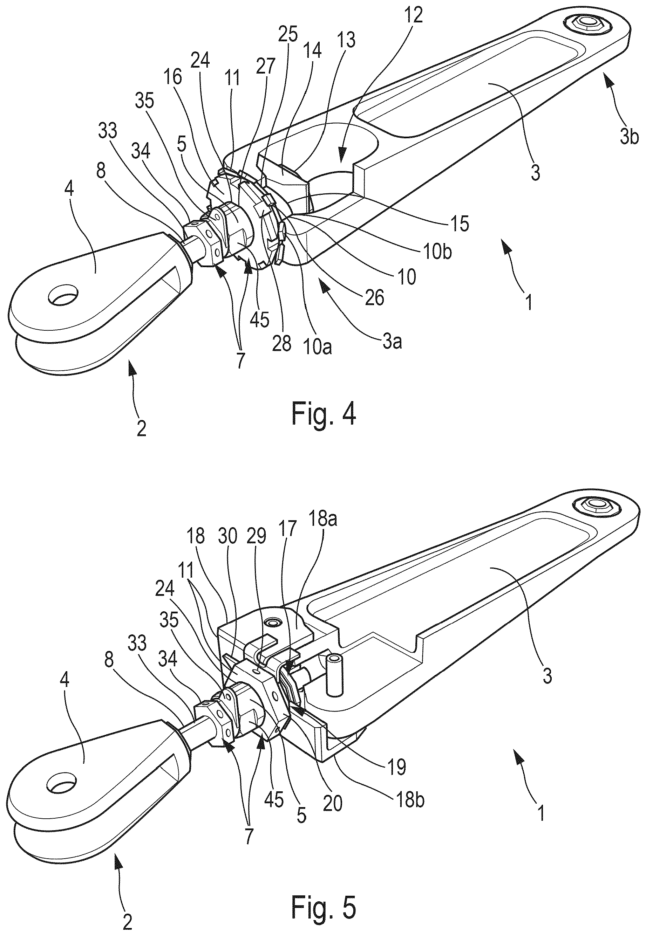

La figure 4 représente une première variante de la bielle réglable 1 ne faisant pas partie de l'invention.

Dans cette première variante, le corps de bielle 3 comporte une lumière 12 traversant le corps de bielle 3 perpendiculairement à l'axe pivot A2. L'alésage lisse 10 présente une deuxième extrémité 10b débouchant dans la lumière 12. Ainsi, l'alésage lisse 10 est un alésage traversant s'étendant entre, d'une part, sa première extrémité 10a débouchant sur la première extrémité 3a du corps de bielle 3 et, d'autre part, sa deuxième extrémité 10b débouchant dans la lumière 12.

La pièce intermédiaire 5 présente un épaulement circonférentiel 13 sur la surface externe de la pièce intermédiaire 5. La pièce intermédiaire 5 est placée dans l'alésage lisse 10 de façon que l'épaulement circonférentiel 13 soit situé dans la lumière 12.

Dans cette première variante, le dispositif de blocage 11 comprend une platine 14 et un écrou de blocage 16.

La platine 14 est configurée pour bloquer la pièce intermédiaire 5 en translation vers la première extrémité 3a du corps de bielle 3. La platine 14 présente un orifice 15 à travers lequel la pièce intermédiaire 5 est insérée. La platine 14 est disposée entre la deuxième extrémité 10b de l'alésage lisse 10 et l'épaulement circonférentiel 13. Afin que la platine 14 retienne la pièce intermédiaire 5, l'orifice 15 de la platine 14 présente un diamètre strictement inférieur au diamètre de l'épaulement circonférentiel 13. La platine 14 peut prendre différentes formes. La platine 14 possède au moins une surface qui est adaptée afin qu'elle épouse la surface interne de la lumière 12 contre laquelle la platine 14 est plaquée. Sur la figure 4, la platine 14 a une forme de demi-cylindre ayant une surface courbe et une surface plane. La surface courbe est adaptée afin qu'elle épouse la surface interne de la lumière 12 contre laquelle la platine 14 est plaquée. La surface plane est adaptée pour recevoir l'épaulement circonférentiel 13 de la pièce intermédiaire 5.

L'écrou de blocage 16 est configuré pour bloquer la pièce intermédiaire 5 en translation vers la deuxième extrémité 3b du corps de bielle 3. L'écrou de blocage 16 est vissé à une portion filetée sur la surface externe de la pièce intermédiaire 5 contre la première extrémité 3a du corps de bielle 3.

Dans cette première variante, la pièce intermédiaire 5 peut comprendre une rainure longitudinale 24. L'écrou de blocage 16 peut correspondre à un écrou à encoches. Avantageusement, le dispositif de verrouillage 7 comprend une rondelle de frein 25 assemblée à la pièce intermédiaire 5 entre l'écrou de blocage 16 et la première extrémité 10a de l'alésage lisse 10. La rondelle de frein 25 comporte des languettes externes 26 s'écartant de la rondelle de frein 25 et une dent interne 27 s'insérant dans la rainure longitudinale 24 de la pièce intermédiaire 5. La rotation de la pièce intermédiaire 5 par rapport au corps de bielle 3 est bloquée en plaquant la rondelle de frein 25 contre la première extrémité 10a de l'alésage lisse 10 par vissage de l'écrou de blocage 16 à la portion filetée de la pièce intermédiaire 5 en direction du corps de bielle 3 et par pliage des languettes 26 de la rondelle de frein 25 dans des encoches 28 de l'écrou de blocage 16.

La figure 5 représente une deuxième variante de la bielle réglable 1 ne faisant pas partie de l'invention.

Dans cette deuxième variante, la pièce intermédiaire 5 présente un épaulement circonférentiel 17 sur sa surface externe.

Dans cette deuxième variante, le dispositif de blocage 11 comprend une pièce en U 18 et un écrou de blocage 20. La pièce en U 18 est intercalée entre l'épaulement circonférentiel 17 et l'écrou de blocage 20.

La pièce en U 18 est configurée pour bloquer la pièce intermédiaire 5 en translation vers la première extrémité 3a du corps de bielle 3. La pièce en U 18 présente un profil en forme de U ayant deux pans 18a, 18b parallèles. Les deux pan 18a, 18b correspondent aux deux extrémités libres du U qui est la forme du profil de la pièce en U. Les deux pans 18a, 18b de la pièce en U 18 sont fixés à la première extrémité 3a du corps de bielle 3. Les extrémités libres du U sont dirigées vers la deuxième extrémité 3b du corps de bielle 3. La pièce en U 18 présente une ouverture 19 à travers laquelle la pièce intermédiaire 5 est insérée. L'épaulement circonférentiel 17 est situé entre la pièce en U 18 et la première extrémité 3a du corps de bielle 3. L'ouverture 19 de la pièce en U 18 présente un diamètre strictement inférieur au diamètre de l'épaulement circonférentiel 17 de la pièce intermédiaire 5, afin que la pièce en U 18 retienne la pièce intermédiaire 5.

L'écrou de blocage 20 est configuré pour bloquer la pièce intermédiaire 5 en translation vers la deuxième extrémité 3b du corps de bielle 3. L'écrou de blocage 20 est vissé à une portion filetée sur la surface externe de la pièce intermédiaire 5 contre la pièce en U 18.

Dans cette deuxième variante, la pièce intermédiaire 5 peut comprendre une rainure longitudinale 24. L'écrou de blocage 20 peut correspondre à un premier écrou à fil-frein présentant des trous fil-frein 29.

Avantageusement, le dispositif de verrouillage 11 comprend une première rondelle à fil-frein 30 assemblée à la pièce intermédiaire 5 entre le premier écrou à fil-frein 20 et la pièce en U 18. La première rondelle à fil-frein 30 comporte une languette ayant un trou fil-frein et une dent interne s'insérant dans la rainure longitudinale 24 de la pièce intermédiaire 5.

La rotation de la pièce intermédiaire 5 par rapport au corps de bielle 3 peut être bloquée en plaquant la première rondelle à fil-frein 30 contre la pièce en U 18 par vissage du premier écrou à fil-frein 20 et par un fil passant à travers des trous fil-frein 29 du premier écrou à fil-frein 20 et par le trou fil-frein de la première rondelle à fil-frein.

La figure 6 représente un mode de réalisation de la bielle réglable 1 selon l'invention.

Dans cette variante, la pièce intermédiaire 5 présente une gorge circonférentielle 21 sur sa surface externe. Le dispositif de blocage 11 comprend au moins une tige de retenue 22.

La ou les tiges de retenue 22 traversent au moins partiellement le corps de bielle 3 perpendiculairement à l'axe pivot A2. La ou les tiges de retenue 22 sont insérées partiellement dans la gorge circonférentielle 21 de la pièce intermédiaire 5 parallèlement à la gorge circonférentielle 21. Ainsi, la ou des tiges de retenue 22 bloquent la translation de la pièce intermédiaire 5 parallèlement à l'axe pivot A2. De préférence, le dispositif de blocage 11 comprend deux tiges de retenue 22 insérées dans le corps de bielle 3 de part et d'autre de la pièce intermédiaire 5. Par ailleurs, le ou les tiges de retenues 22 peuvent comprendre une surface externe ayant une portion lisse et une portion filetée. La portion filetée peut être située à leur extrémité libre. Ainsi, la ou les tiges de retenue 22 sont vissées dans le corps de bielle 3 à leur extrémité libre au niveau de la portion filetée. La portion lisse de la ou des tiges de retenues 22 est alors reçue partiellement dans la gorge circonférentielle 21. Dans cette troisième variante, la pièce intermédiaire 5 peut comprendre une rainure longitudinale 24.

Avantageusement, le dispositif de verrouillage 11 comprend un premier écrou à fil-frein 23 vissé à une section filetée de la pièce intermédiaire 5 et un une première rondelle à fil-frein 30 assemblée à la pièce intermédiaire 5 entre le premier écrou à fil-frein 23 et la première extrémité 10a de l'alésage lisse 10. La première rondelle à fil-frein 30 comporte une languette 31 ayant un trou fil-frein 32 et une dent interne s'insérant dans la rainure longitudinale 24 de la pièce intermédiaire 5.

La rotation de la pièce intermédiaire 5 par rapport au corps de bielle 3 peut être bloquée en plaquant la première rondelle à fil-frein 30 contre la première extrémité 10a de l'alésage lisse 10 par vissage du premier écrou à fil-frein 23 et par un fil passant à travers des trous fil-frein 32 du premier écrou à fil-frein 23 et par le trou fil-frein 32 de la première rondelle à fil-frein 30.

Pour chacune des variantes du premier mode de réalisation (figure 4, figure 5 et figure 6), le dispositif de verrouillage 11 peut comprendre en outre un écrou de verrouillage 34 vissé à la tige filetée 8 de la chape 4 pour bloquer la translation de la tige filetée 8 de la chape 4 par rapport à la pièce intermédiaire 5.

Par exemple, l'écrou de verrouillage 16 correspond à un deuxième écrou à fil-frein. La tige filetée 8 de la chape 4 comprend une rainure longitudinale 33.

Le dispositif de verrouillage 11 peut comprendre également une deuxième rondelle à fil-frein 35 assemblée à la tige filetée 8 de la chape 4 entre le deuxième écrou à fil-frein 16 et la pièce intermédiaire 5. La deuxième rondelle à fil-frein 35 comporte une languette ayant un trou fil-frein et une dent interne s'insérant dans la rainure longitudinale 33 de la tige filetée 8 de la chape 4. La rotation de la pièce intermédiaire 5 par rapport au corps de bielle 3 est bloquée en plaquant la deuxième rondelle fil-frein 35 contre la pièce intermédiaire 5 par vissage du deuxième écrou à fil-frein 16 et par le passage d'un fil à travers des trous fil-frein du deuxième écrou à fil-frein 16 et par le trou fil-frein de la deuxième rondelle à fil-frein 35.

De plus, pour chacune des variantes du premier mode de réalisation, la pièce intermédiaire 5 peut comprendre au moins deux méplats 45 sur sa surface externe, disposés à 180° l'un par rapport à l'autre. Ces méplats 45 permettent à l'utilisateur d'actionner manuellement ou à l'aide d'un outil la pièce intermédiaire 5 pour qu'elle entre en rotation autour de l'axe pivot A2. L'outil peut correspondre à une clé à molette, une clé anglaise, une clé multiprise ou toute autre sorte d'outil adapté.

Selon un deuxième mode ne faisant pas partie de l'invention représenté sur la figure 7, la liaison pivot L1 lie la pièce intermédiaire 6 à la chape 4. De plus, la liaison hélicoïdale L2 lie la pièce intermédiaire 6 au corps de bielle 3.

Selon une variante, la pièce intermédiaire 6 correspond à une tige filetée 6 présentant un axe de révolution confondu avec l'axe pivot A2. La chape 4 comprend une ouverture 36 présentant un centre confondu avec l'axe pivot A2. La tige filetée 6 présente une première extrémité 6a passant dans l'ouverture 36 de la chape 4 pour former la liaison pivot L1.

Le corps de bielle 3 présente un alésage taraudé 37 présentant un axe de révolution confondu avec l'axe pivot A2. La tige filetée 6 présente une deuxième extrémité 6b vissée dans l'alésage taraudé 37 pour former la liaison hélicoïdale L2. L'alésage taraudé 37 peut correspondre à un alésage lisse dans lequel est inséré un manchon taraudé.

Dans cette variante, le dispositif d'ajustement 2 comprend en outre un dispositif de blocage 11 configuré pour bloquer la chape 4 en translation parallèlement à l'axe pivot A2 le long de la tige filetée 6.

Une rotation de la tige filetée 6 par rapport au corps de bielle 3 par un utilisateur est susceptible d'entraîner une translation de la tige filetée 6 et de la chape 4 selon l'axe pivot A2 quand la chape 4 est bloquée en rotation autour de l'axe pivot A2 par l'utilisateur.

Dans cette variante, le dispositif de blocage 11 comprend un premier écrou de blocage 38 et un épaulement circonférentiel 39.

Le premier écrou de blocage 38 est vissé à la première extrémité 6a de la tige filetée 6 de façon que la chape 4 soit bloquée en translation vers la première extrémité 6a de la tige filetée 6. L'épaulement circonférentiel 39 correspond à un épaulement circonférentiel de la tige filetée 6 de façon que la chape 4 soit bloquée en translation vers la deuxième extrémité 6b de la tige filetée 6.

Dans cette variante, la tige filetée 6 comprend une rainure longitudinale 40. Le premier écrou de blocage 38 correspond à un écrou à encoches. Le dispositif de verrouillage comprend une première rondelle de frein 41, une deuxième rondelle de frein 42, une troisième rondelle de frein 44 et un deuxième écrou de blocage 43.

La première rondelle de frein 41 est montée à la tige filetée 6 entre la chape 4 et l'écrou à encoche 38. La première rondelle de frein 41 comporte des languettes externes s'écartant de la première rondelle de frein 41 et une dent interne s'insérant dans la rainure longitudinale 40 de la tige filetée 6.

La deuxième rondelle de frein 42 est montée à la tige filetée 6 entre la chape 4 et l'épaulement circonférentiel 39. La deuxième rondelle de frein 42 comporte des languettes externes s'écartant de la deuxième rondelle de frein 42 et une dent interne s'insérant dans la rainure longitudinale 40 de la tige filetée 6.

Le deuxième écrou de blocage 43 est vissé à la deuxième extrémité 6b de la tige filetée 6.

La troisième rondelle de frein 44 est montée à la tige filetée 6 entre le deuxième écrou de blocage 43 et la première extrémité 3b du corps de bielle 3. La troisième rondelle de frein 44 comporte des languettes externes s'écartant de la troisième rondelle de frein 44 et une dent interne s'insérant dans la rainure longitudinale 40 de la tige filetée 6.

La rotation de la tige filetée 6 par rapport au corps de bielle 3 est bloquée en vissant l'écrou à encoche 38 contre la première rondelle de frein 41 plaquée contre la chape 4 et par pliage des languettes de la première rondelle de frein 41 dans des encoches de l'écrou à encoche 38, en pliant les languettes de la deuxième rondelle de frein 42 sur la chape 4 et en vissant le deuxième écrou de blocage 43 contre la troisième rondelle de frein 44 plaquée contre la première extrémité 3a du corps de bielle 3.

De plus, pour ce deuxième mode de réalisation, l'épaulement circonférentiel 39 de la tige filetée 6 peut comprendre au moins deux méplats sur sa surface externe, disposés à 180° l'un par rapport à l'autre. Ces méplats permettent à l'utilisateur d'actionner manuellement ou à l'aide d'un outil la tige filetée 6 pour qu'elle entre en rotation autour de l'axe pivot A2. L'outil peut correspondre à une clé à molette, une clé anglaise, une clé multiprise ou toute autre sorte d'outil adapté.

L'invention concerne également un procédé de montage de la bielle réglable 1 à un premier élément A et à un deuxième élément B (figure 3).

Le procédé comprend les étapes suivantes :
- une étape E2 d'alignement de la bielle réglable 1 entre le deuxième élément B et le premier élément A,
- une étape E3 d'alignement de la chape 4 dans une position angulaire souhaitée par rapport au premier élément A,
- une étape E4 de rotation de la pièce intermédiaire 5, 6 du dispositif d'ajustement 2 par une mise en mouvement de la liaison hélicoïdale L2.

La pièce intermédiaire 5, 6 est mise en rotation par rapport au corps de bielle 3 par un utilisateur pour entraîner une translation de la chape 4 parallèlement à l'axe de pivot A2 jusqu'à ce que la chape 4 atteigne une position souhaitée permettant la fixation de la chape 4 au premier élément A. La liaison pivot L1 est mise en mouvement par la rotation de la pièce intermédiaire 5, 6 alors que la position angulaire de la chape 4 est maintenue.

L'étape E2 d'alignement correspond à une mise en place de la bielle réglable 1 entre les deux éléments A et B de façon que l'axe longitudinal A1 de la bielle réglable 1 soit le plus proche possible de sa position finale. Sa position finale correspond à la position de l'axe longitudinal A1 quand la chape 4 est fixée au premier élément A.

L'étape E4 d'alignement de la chape 4 dans une position angulaire souhaitée autour de l'axe pivot A2 correspond à une mise en position angulaire finale de la chape 4 correspondant à la position angulaire que la chape 4 aura quand elle sera fixée au premier élément A.

Le procédé comprend en outre une étape E5 de fixation de la chape 4 au premier élément A.

Selon la première configuration de la bielle réglable 1, le procédé comprend en outre une étape E1 de fixation de la deuxième extrémité 3b du corps de bielle 3 au deuxième élément B.

Le procédé peut en outre comprendre une étape E6 de verrouillage par le dispositif de verrouillage 7 pour bloquer la rotation de la pièce intermédiaire 5, 6 par rapport au corps de bielle 3 après que la chape 4 a atteint une position souhaitée permettant la fixation de la chape 4 au premier élément A.

Selon une variante, l'étape E6 peut précéder l'étape E5. Dans cette variante, le dispositif de verrouillage 7 bloque la rotation de la pièce intermédiaire 5, 6 avant de fixer la chape 4 au premier élément A.

Selon une autre variante, l'étape E6 peut succéder à l'étape E5. Dans cette variante, le dispositif de verrouillage 7 bloque la rotation de la pièce intermédiaire 5, 6 après avoir fixé la chape 4 au premier élément A.

Une telle bielle présente l'avantage d'être interchangeable et de pouvoir être utilisée pour de multiples applications nécessitant un réglage.

## Revendications

1. Bielle réglable en longueur s'étendant selon un axe longitudinal (A1) comprenant :
- un dispositif d'ajustement (2) configuré pour ajuster la longueur de la bielle réglable (1) et d'articuler la bielle réglable (1) à un premier élément (A),
- un corps de bielle (3) présentant une première extrémité (3a) comportant le dispositif d'ajustement (2) et une deuxième extrémité (3b) destinée à lier la bielle réglable (1) à un deuxième élément (B), le dispositif d'ajustement (2) comprenant au moins une chape (4)
de fixation destinée à fixer la bielle réglable (1) au premier élément (A) et une pièce intermédiaire (5, 6) liant la chape (4) au corps de bielle (3) entre une liaison pivot (L1) et une liaison hélicoïdale (L2),
la liaison hélicoïdale (L2) étant configurée pour permettre une translation de la chape (4) le long d'un axe pivot (A2) parallèle à l'axe longitudinal (A1) de la bielle réglable (1) lorsque la pièce intermédiaire (5, 6) est mise en rotation par un utilisateur autour de l'axe pivot (A2),
la liaison pivot (L1) étant configurée pour autoriser le maintien d'une position angulaire de la chape (4) autour de l'axe pivot (A2) quand la pièce intermédiaire (5, 6) est mise en rotation autour de l'axe pivot (A2),
la liaison pivot (L1) liant la pièce intermédiaire (5) au corps de bielle (3), la liaison hélicoïdale (L2) liant la pièce intermédiaire (5) à la chape (4),
la chape (4) comprenant une tige filetée (8) présentant un axe longitudinal confondu avec l'axe pivot (A2),
la pièce intermédiaire (5) présentant une forme générale cylindrique ayant un axe de révolution confondu avec l'axe pivot (A2),
la pièce intermédiaire (5) présentant en outre un alésage traversant taraudé (9), l'alésage traversant taraudé (9) présentant un axe de révolution confondu avec l'axe pivot (A2), la tige filetée (8) de la chape (4) étant vissée dans l'alésage traversant taraudé (9) de la pièce intermédiaire (5) pour former la liaison hélicoïdale (L2),
le corps de bielle (3) présentant un alésage lisse (10) présentant un axe de révolution confondu avec l'axe pivot (A2), l'alésage lisse (10) présentant une première extrémité (10a) débouchant sur la première extrémité (3a) du corps de bielle (3),
la pièce intermédiaire (5) présentant une surface externe lisse, la pièce intermédiaire (5) étant insérée dans l'alésage lisse (10) pour former la liaison pivot (L1),
**caractérisée en ce que**
le dispositif d'ajustement (2) comprend en outre un dispositif de blocage (11) configuré pour bloquer la pièce intermédiaire (5) en translation parallèlement à l'axe pivot (A2),
une rotation de la pièce intermédiaire (5) par rapport au corps de bielle (3) par un utilisateur étant susceptible d'entraîner une translation de la chape (4) selon l'axe pivot (A2) quand la chape (4) est bloquée en rotation autour de l'axe pivot (A2) par l'utilisateur,
la pièce intermédiaire (5) présentant une gorge circonférentielle (21) sur sa surface externe, le dispositif de blocage (11) comprend au moins une tige de retenue (22),
la ou les tiges de retenue (22) traversant au moins partiellement le corps de bielle (3) perpendiculairement à l'axe pivot (A2), la ou les tiges de retenue (22) étant insérées partiellement dans la gorge circonférentielle (21) de la pièce intermédiaire (5) parallèlement à la gorge circonférentielle (21).

2. Bielle selon la revendication 1,
**caractérisée en ce que** le dispositif d'ajustement (2) comporte en outre un dispositif de verrouillage (7) configuré pour bloquer la rotation de la pièce intermédiaire (5, 6) par rapport au corps de bielle (3) après que la chape (4) a atteint une position souhaitée permettant la fixation de la chape (4) au premier élément (A).

3. Procédé de montage de la bielle réglable selon l'une des revendications 1 à 2 à un premier élément (A) et à un deuxième élément (B), **caractérisé en ce qu'**il comprend les étapes suivantes :
- une étape (E2) d'alignement de la bielle réglable (1) entre le deuxième élément (B) et le premier élément (A),
- une étape (E3) d'alignement de la chape (4) dans une position angulaire souhaitée autour de l'axe pivot (A2) par rapport au premier élément (A),
- une étape (E4) de rotation de la pièce intermédiaire (5, 6) du dispositif d'ajustement (2) par une mise en mouvement de la liaison hélicoïdale (L2), la pièce intermédiaire (5, 6) étant mise en rotation par rapport au corps de bielle (3) par un utilisateur pour entraîner une translation de la chape (4) parallèlement à l'axe de pivot (A2) jusqu'à ce que la chape (4) atteigne une position souhaitée permettant la fixation de la chape (4) au premier élément (A), la liaison pivot (L1) est mise en mouvement par la rotation de la pièce intermédiaire (5, 6) alors que la position angulaire de la chape (4) est maintenue,
- une étape (E5) de fixation de la chape (4) au premier élément (A).

4. Procédé selon la revendication 3,
**caractérisé en ce qu'**il comprend en outre une étape (E1) de fixation de la deuxième extrémité (3b) du corps de bielle (3) au deuxième élément (B).

5. Procédé selon l'une des revendications 3 et 4,
**caractérisé en ce qu'**il comprend en outre une étape (E6) de verrouillage par le dispositif de verrouillage (7) pour bloquer la rotation de la pièce intermédiaire (5, 6) par rapport au corps de bielle (3) après que la chape (4) a atteint une position souhaitée permettant la fixation de la chape (4) au premier élément (A).

## Patentansprüche

1. Längenverstellbare Pleuelstange, die sich entlang einer Längsachse (A1) erstreckt, umfassend:
- eine Einstellvorrichtung (2), die konfiguriert ist, um die Länge der einstellbaren Pleuelstange (1) einzustellen und die einstellbare Pleuelstange (1) an einem ersten Element (A) anzufügen;
- einen Pleuelstangenkörper (3), der ein erstes Ende (3a) aufweist, das die Einstellvorrichtung (2) umfasst, sowie ein zweites Ende (3b), das dazu vorgesehen ist, die einstellbare Pleuelstange (1) mit einem zweiten Element (B) zu verbinden,
wobei die Einstellvorrichtung (2) mindestens eine Abdeckung (4) zur Befestigung umfasst, die dazu vorgesehen ist, die einstellbare Pleuelstange (1) am ersten Element (A) zu befestigen, und ein Zwischenwerkstück (5, 6), das die Abdeckung (4) mit dem Pleuelstangenkörper (3) zwischen einer Schwenkverbindung (L1) und einer schneckenförmigen Verbindung (L2) verbindet,
wobei die schneckenförmige Verbindung (L2) konfiguriert ist, um eine Verschiebung der Abdeckung (4) entlang einer Schwenkachse (A2) parallel zur Längsachse (A1) der einstellbaren Pleuelstange (1) zu ermöglichen, wenn das Zwischenwerkstück (5, 6) durch einen Benutzer um die Schwenkachse (A2) herum in Drehung versetzt wird,
wobei die Schwenkverbindung (L1) konfiguriert ist, um das Halten einer Winkelposition der Abdeckung (4) um die Schwenkachse (A2) herum zu erlauben, wenn das Zwischenwerkstück (5, 6) um die Schwenkachse (A2) herum in Drehung versetzt wird,
wobei die Schwenkverbindung (L1) das Zwischenwerkstück (5) mit dem Pleuelstangenkörper (3) verbindet, wobei die schneckenförmige Verbindung (L2) das Zwischenwerkstück (5) mit der Abdeckung (4) verbindet,
wobei die Abdeckung (4) einen Gewindestift (8) umfasst, der eine Längsachse aufweist, die mit der Schwenkachse (A2) zusammenfällt,
wobei das Zwischenwerkstück (5) eine allgemeine zylindrische Form aufweist, die eine Drehachse aufweist, die mit der Schwenkachse (A2) zusammenfällt,
wobei das Zwischenwerkstück (5) weiter eine gewundene Durchgangsbohrung (9) aufweist, wobei die gewundene Durchgangsbohrung (9) eine Drehachse aufweist, die mit der Schwenkachse (A2) zusammenfällt, wobei der Gewindestift (8) der Abdeckung in die gewundene Durchgangsbohrung (9) des Zwischenstücks (5) eingeschraubt ist, um die schneckenförmige Verbindung (L2) zu bilden,
wobei der Pleuelstangenkörper (3) eine glatte Bohrung (10) aufweist, die eine Drehachse aufweist, die mit der Schwenkachse (A2) zusammenfällt, wobei die glatte Bohrung (10) ein erstes Ende (10a) aufweist, das zum ersten Ende (3a) des Pleuelstangenkörpers (3) führt,
wobei das Zwischenwerkstück (5) eine glatte Außenfläche aufweist, wobei das Zwischenstück (5) in die glatte Bohrung (10) eingesetzt ist, um die Schwenkverbindung (L1) zu bilden,
**dadurch gekennzeichnet, dass**
die Einstellvorrichtung (2) weiter eine Blockiervorrichtung (11) umfasst, die konfiguriert ist, um das Zwischenwerkstück (5) bei einer Verschiebung parallel zur Schwenkachse (A2) zu blockieren,
eine Drehung des Zwischenwerkstücks (5) in Bezug auf den Pleuelstangenkörper (3) durch einen Benutzer eine Verschiebung der Abdeckung (4) entlang der Schwenkachse (A2) bewirken kann, wenn die Drehung der Abdeckung (4) um die Schwenkachse (A2) herum von dem Benutzer blockiert wird,
wobei das Zwischenwerkstück (5) eine auf seiner Außenfläche umlaufende Nut (21) aufweist, wobei die Blockiervorrichtung (11) mindestens einen Haltestift (22) umfasst, wobei der oder die Haltestifte (22) den Pleuelstangenkörper (3) zumindest teilweise senkrecht zur Schwenkachse (A2) durchqueren, wobei der oder die Haltestifte (22) teilweise in die umlaufende Nut (21) des Zwischenwerkstücks (5) parallel zur umlaufenden Nut (21) eingesetzt sind.

2. Pleuelstange nach Anspruch 1,
**dadurch gekennzeichnet, dass** die Einstellvorrichtung (2) weiter eine Verriegelungsvorrichtung (7) umfasst, die konfiguriert ist, um die Drehung des Zwischenwerkstücks (5, 6) in Bezug auf den Pleuelstangenkörper (3) zu blockieren, nachdem die Abdeckung (4) eine gewünschte Position erreicht hat, die die Befestigung der Abdeckung (4) am ersten Element (A) ermöglicht.

3. Verfahren zur Montage der verstellbaren Pleuelstange nach einem der Ansprüche 1 bis 2 an einem ersten Element (A) und an einem zweiten Element (B),
**dadurch gekennzeichnet, dass** es die folgenden Schritte umfasst:
- einen Schritt (E2) der Ausrichtung der verstellbaren Pleuelstange (1) zwischen dem zweiten Element (B) und dem ersten Element (A),
- einen Schritt (E3) der Ausrichtung der Abdeckung (4) in einer gewünschten Winkelposition um die Schwenkachse (A2) herum in Bezug auf das erste Element (A)
- einen Schritt (E4) der Drehung des Zwischenwerkstücks (5, 6) der Einstellvorrichtung (2) durch eine Bewegung der schneckenförmigen Verbindung (L2), wobei das Zwischenstück (5, 6) in Bezug auf den Pleuelstangenkörper (3) durch einen Benutzer in Drehung versetzt wird, um eine Verschiebung der Abdeckung (4) parallel zur Schwenkachse (A2) zu bewirken, bis die Abdeckung (4) eine gewünschte Position erreicht hat, die die Befestigung der Abdeckung (4) am ersten Element (A) ermöglicht, wobei die Schwenkverbindung (L1) durch die Drehung des Zwischenwerkstücks (5, 6) bewegt wird, während die Winkelposition der Abdeckung (4) beibehalten wird,
- einen Schritt (E5) der Befestigung der Abdeckung (4) am ersten Element (A).

4. Verfahren nach Anspruch 3,
**dadurch gekennzeichnet, dass** es weiter einen Schritt (E1) der Befestigung des zweiten Endes (3b) des Pleuelstangenkörpers (3) am zweiten Element (B) umfasst.

5. Verfahren nach einem der Ansprüche 3 und 4,
**dadurch gekennzeichnet, dass** es weiter einen Schritt (E6) der Verrieglung durch die Verriegelungsvorrichtung (7) umfasst, um die Drehung des Zwischenwerkstücks (5, 6) in Bezug auf den Pleuelstangenkörper (3) zu blockieren, nachdem die Abdeckung (4) eine gewünschte Position erreicht hat, die die Befestigung der Abdeckung (4) am ersten Element (A) ermöglicht.

## Claims

1. A connecting rod that is adjustable in length extending along a longitudinal axis (A1) comprising:
- an adjustment device (2) configured to adjust the length of the adjustable connecting rod (1) and articulate the adjustable connecting rod (1) to a first element (A),
- a connecting rod body (3) having a first end (3a) comprising the adjustment device (2) and a second end (3b) intended to link the adjustable connecting rod (1) to a second element (B),
the adjustment device (2) comprising at least one fixing yoke (4) intended to fix the adjustable connecting rod (1) to the first element (A) and an intermediate part (5, 6) linking the yoke (4) to the connecting rod body (3) between a pivot link (L1) and a helical link (L2),
the helical link (L2) being configured to allow a translation of the yoke (4) along a pivot axis (A2) parallel to the longitudinal axis (A1) of the adjustable connecting rod (1) when the intermediate part (5, 6) is rotated by a user about the pivot axis (A2),
the pivot link (L1) being configured to allow an angular position of the yoke (4) about the pivot axis (A2) to be maintained when the intermediate part (5, 6) is rotated about the pivot axis (A2),
the pivot link (L1) linking the intermediate part (5) to the connecting rod body (3), the helical link (L2) linking the intermediate part (5) to the yoke (4),
the yoke (4) comprising a threaded rod (8) having a longitudinal axis coinciding with the pivot axis (A2),
the intermediate part (5) having a generally cylindrical form having an axis of revolution coinciding with the pivot axis (A2),
the intermediate part (5) further having a tapped through-bore (9), the tapped through-bore (9) having an axis of revolution coinciding with the pivot axis (A2), the threaded rod (8) of the yoke (4) being screwed into the tapped through-bore (9) of the intermediate part (5) to form the helical link (L2),
the connecting rod body (3) having a smooth bore (10) having an axis of revolution coinciding with the pivot axis (A2), the smooth bore (10) having a first end (10a) emerging on the first end (3a) of the connecting rod body (3),
the intermediate part (5) having a smooth outer surface, the intermediate part (5) being inserted into the smooth bore (10) to form the pivot link (L1),
**characterized in that** the adjustment device (2) further comprises a blocking device (11) configured to block the intermediate part (5) in translation parallel to the pivot axis (A2),
a rotation of the intermediate part (5) with respect to the connecting rod body (3) by a user being able to drive a translation of the yoke (4) along the pivot axis (A2) when the yoke (4) is blocked in rotation about the pivot axis (A2) by the user,
the intermediate part (5) having a circumferential groove (21) on its outer surface, the blocking device (11) comprises at least one retaining rod (22), the retaining rod or rods (22) passing at least partially through the connecting rod body (3) at right angles to the pivot axis (A2), the retaining rod or rods (22) being inserted partially into the circumferential groove (21) of the intermediate part (5) parallel to the circumferential groove (21).

2. The connecting rod as claimed in claim 1,
**characterized in that** the adjustment device (2) further comprises a locking device (7) configured to block the rotation of the intermediate part (5, 6) with respect to the connecting rod body (3) after the yoke (4) has reached a desired position allowing the yoke (4) to be fixed to the first element (A).

3. A method for fitting the adjustable connecting rod, according to one of claims 1 to 2, to a first element (A) and to a second element (B),
**characterized in that** it comprises the following steps:
- a step (E2) of alignment of the adjustable connecting rod (1) between the second element (B) and the first element (A),
- a step (E3) of alignment of the yoke (4) in a desired angular position about the pivot axis (A2) with respect to the first element (A),
- a step (E4) of rotation of the intermediate part (5, 6) of the adjustment device (2) by a movement of the helical link (L2), the intermediate part (5, 6) being rotated with respect to the connecting rod body (3) by a user to drive a translation of the yoke (4) parallel to the pivot axis (A2) until the yoke (4) reaches a desired position allowing the yoke (4) to be fixed to the first element (A), the pivot link (L1) is moved by the rotation of the intermediate part (5, 6) while the angular position of the yoke (4) is maintained,
- a step (E5) of fixing of the yoke (4) to the first element (A).

4. The method as claimed in claim 3,
**characterized in that** it further comprises a step (E1) of fixing of the second end (3b) of the connecting rod body (3) to the second element (B).

5. The method as claimed in one of claims 3 and 4,
**characterized in that** it further comprises a step (E6) of locking by the locking device (7) to block the rotation of the intermediate part (5, 6) with respect to the connecting rod body (3) after the yoke (4) has reached a desired position allowing the yoke (4) to be fixed to the first element (A).
